# DEMANDE DE BREVET EUROPEEN

(11) **EP 4 648 246 A1**
(43) Date de publication de la demande: **12.11.2025**
(21) Numéro de dépôt: 25174881.0
(22) Date de dépôt: 07.05.2025
(51) Int. Cl.: H02J 1/10, H02J 3/46, H02J 4/00

(54) **SYSTÈME DE GÉNÉRATION ÉLECTRIQUE POUR UN AÉRONEF ET PROCÉDÉ ASSOCIÉ**

(30) Priorité: 11.05.2024 FR 2404852
(71) Demandeur: Safran Electrical & Power, 31702 Blagnac (FR)
(72) Inventeur: MAUVIEL, Quentin, 77550 MOISSY-CRAMAYEL (FR); MAZARIN, Mathieu, 77550 MOISSY-CRAMAYEL (FR); BEGGIORA, Geoffrey, 77550 MOISSY-CRAMAYEL (FR)
(74) Mandataire: Argyma

(57) **Abrégé**

Un système de génération électrique pour alimenter au moins un réseau électrique d'un aéronef, le système de génération électrique comprenant un dispositif de contrôle configuré pour recevoir une consigne générale de fonctionnement et émettre une première consigne de paramétrage (P_{CONS1}) pour le premier convertisseur (C1) et une deuxième consigne de paramétrage (P_{CONS2}) pour le deuxième convertisseur (C2), chaque consigne de paramétrage (P_{CONS1}, P_{CONS2}) étant soit une consigne en régulation de tension (RegU) pour asservir le convertisseur (C1, C2) à une tension de distribution soit une consigne en régulation auxiliaire (RegA) de la turbomachine, le dispositif de contrôle étant configuré pour émettre une consigne de paramétrage relative à une transition auxiliaire (TransA) avec un retard de stabilisation par rapport à une consigne de paramétrage relative à une transition en tension (TransU) de manière à prolonger la régulation en tension (RegU) lors d'une transition auxiliaire (TransA).

## Description

### DOMAINE TECHNIQUE

La présente invention concerne un système de génération électrique pour un aéronef et, plus généralement, un système d'hybridation électrique pour un aéronef.

Le changement climatique est une préoccupation majeure pour de nombreux organes législatifs et de régulation à travers le monde. En effet, diverses restrictions sur les émissions de carbone ont été, sont ou seront adoptées par divers Etats. En particulier, une norme ambitieuse s'applique à la fois aux nouveaux types d'aéronefs mais aussi à ceux en circulation nécessitant de devoir mettre en oeuvre des solutions technologiques afin de les rendre conformes aux réglementations en vigueur. L'aviation civile se mobilise depuis maintenant plusieurs années pour apporter une contribution à la lutte contre le changement climatique.

Les efforts de recherche technologique ont déjà permis d'améliorer de manière très significative les performances environnementales des aéronefs. La Déposante prend en considération les facteurs impactant dans toutes les phases de conception et de développement pour obtenir des composants et des produits aéronautiques moins énergivores, plus respectueux de l'environnement et dont l'intégration et l'utilisation dans l'aviation civile ont des conséquences environnementales modérées dans un but d'amélioration de l'efficacité énergétique des aéronefs.

Ces travaux de recherche et de développement soutenus portent notamment sur de nouvelles générations de moteurs d'aéronef hybrides thermiques et électriques. L'objectif de la Déposante est notamment de développer des aéronefs intégrant un système de génération électrique de forte puissance. Ceci permettrait d'augmenter la part des équipements électriques à bord afin de réduire la consommation de carburant.

En pratique, dans une turbomachine d'aéronef classique, il est connu d'intégrer un générateur électrique qui prélève de l'énergie mécanique sur l'arbre basse pression de la turbomachine d'aéronef pour produire de l'énergie électrique qui est distribuée à une unité de distribution d'énergie électrique.

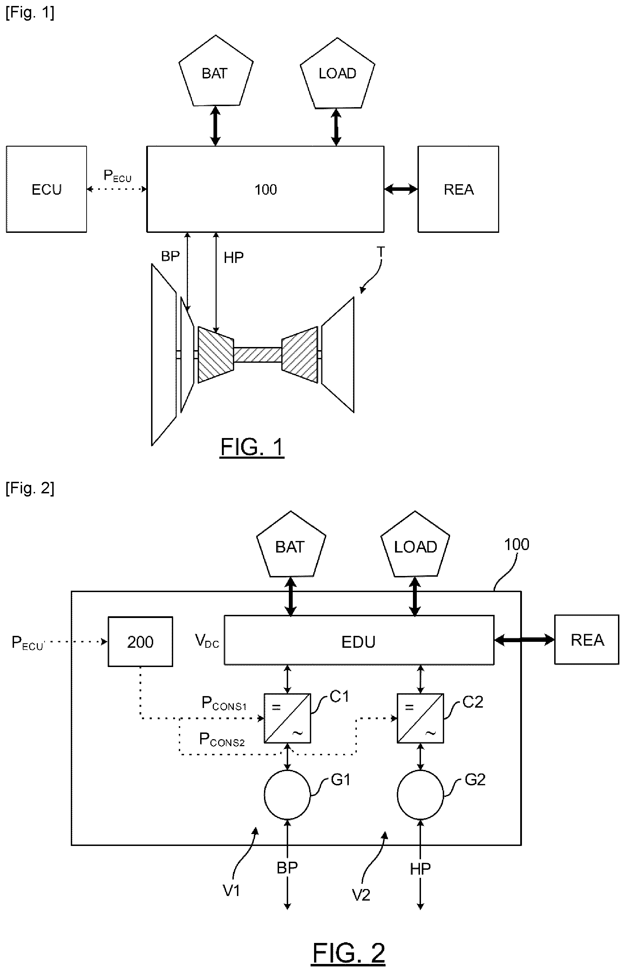

Pour augmenter la génération d'énergie électrique, en référence à la figure 1, il a été proposé un système de génération électrique 100 configuré pour prélever, d'une part, de l'énergie mécanique sur un arbre basse pression BP et, d'autre part, de l'énergie mécanique sur un arbre haute pression HP d'une turbomachine d'aéronef T pour alimenter un réseau électrique de l'aéronef REA avec une tension de distribution calibrée. Autrement dit, le système de génération électrique 100 comporte au moins deux voies d'alimentation, ici, une voie BP et une voie HP. Le système de génération électrique 100 peut être par ailleurs relié à des sources électriques BAT ou des charges électriques LOAD.

En pratique, le système de génération électrique 100 est configuré pour recevoir une consigne de fonctionnement P_{ECU} issue d'un calculateur ECU de la turbomachine T. Cette consigne de fonctionnement P_{ECU} permet de déterminer, par exemple, la quantité de puissance électrique à générer, le prélèvement mécanique sur chaque arbre, etc. Autrement dit, la consigne de fonctionnement P_{ECU} permet de déterminer la stratégie d'hybridation retenue.

En référence à la figure 2, le système de génération électrique 100 comporte deux génératrices G1, G2 (sources électriques) reliées respectivement à l'arbre basse pression BP et à l'arbre haute pression HP de la turbomachine T. Le système de génération électrique 100 comporte en outre deux convertisseurs C1, C2, en particulier des onduleurs, qui sont respectivement associés aux deux génératrices G1, G2. Chaque génératrice G1, G2 génère un courant alternatif qui est ensuite redressé par son convertisseur C1, C2 pour fournir une tension de distribution V_{DC} à une unité de distribution électrique EDU qui est reliée électriquement au réseau électrique de l'aéronef REA, aux sources électriques BAT ou aux charges électriques LOAD.

Il est présenté dans cet exemple une application liée à la génération électrique mais l'invention s'applique plus généralement au domaine de l'hybridation dans lequel une machine électrique remplit, d'une part, une fonction de générateur pour prélever de la puissance mécanique sur l'arbre basse pression BP ou sur l'arbre haute pression HP et, d'autre part, une fonction de moteur pour injecter de la puissance mécanique sur l'arbre basse pression BP ou sur l'arbre haute pression HP. Pour une fonction moteur, chaque convertisseur C1, C2 peut également convertir la tension continue V_{DC} pour alimenter en courant alternatif respectivement les deux machines électriques G1, G2 afin d'injecter de la puissance.

Par souci de clarté et de concision, il n'est présenté que la fonction génératrice. Pour une fonction moteur, le calculateur ECU fournit une consigne de fonctionnement P_{ECU} permettant de déterminer, par exemple, l'injection de puissance mécanique sur chaque arbre, etc. Le système d'hybridation est bidirectionnel pour permettre la génération de puissance électrique mais également l'injection de puissance mécanique. Le calculateur ECU permet de réaliser une supervision générale en déterminant une consigne de fonctionnement P_{ECU} qui est fonction de la disponibilité et de la capacité des sources électriques mais également des besoins des charges électriques.

De manière connue, chaque convertisseur C1, C2 comporte une pluralité d'interrupteurs, en particulier des transistors de puissance, qui permettent de modifier la puissance électrique générée et la puissance électrique prélevée par chaque génératrice G1, G2 sur chaque arbre BP, HP. Le système de génération électrique 100 comporte un dispositif de contrôle 200 pour émettre des consignes de paramétrage P_{CONS1}, P_{CONS2} à chaque convertisseur C1, C2 en fonction de la consigne de fonctionnement P_{ECU} de manière à obtenir une tension de distribution V_{DC} qui soit adaptée à l'unité de distribution électrique EDU.

De manière connue, chaque convertisseur C1, C2 est configuré pour recevoir des consignes de paramétrage P_{CONS1}, P_{CONS2} de plusieurs types :
- Une consigne de régulation de tension RegU configurée pour asservir le convertisseur C1, C2 à la tension de distribution V_{DC},
- Une consigne de régulation auxiliaire RegA configurée pour asservir le convertisseur C1, C2 à une puissance demandée ou à un couple demandé de la turbomachine d'aéronef T.

En particulier, le dispositif de contrôle 200 peut déterminer le type de régulation de chaque convertisseur C1, C2 en déterminant la consigne de paramétrage P_{CONS1}, P_{CONS2}.

En pratique, le dispositif de contrôle 200 est relié à chaque convertisseur C1, C2 par un ou plusieurs câbles de communication (liaison point à point ou multi-abonné) pour communiquer les consignes de paramétrage P_{CONS1}, P_{CONS2}. De tels câbles de communication, en particulier du type CAN, permettent une communication des consignes de paramétrage P_{CONS1}, P_{CONS2} environ tous les 15ms, ce qui est lent. Il n'est ainsi pas possible de réaliser une régulation réactive et dynamique.

En fonctionnement nominal, un premier convertisseur C1 est généralement régulé en tension RegU afin de contrôler de manière optimale la tension de distribution V_{DC} tandis que le deuxième convertisseur C2 est régulé de manière auxiliaire RegA.

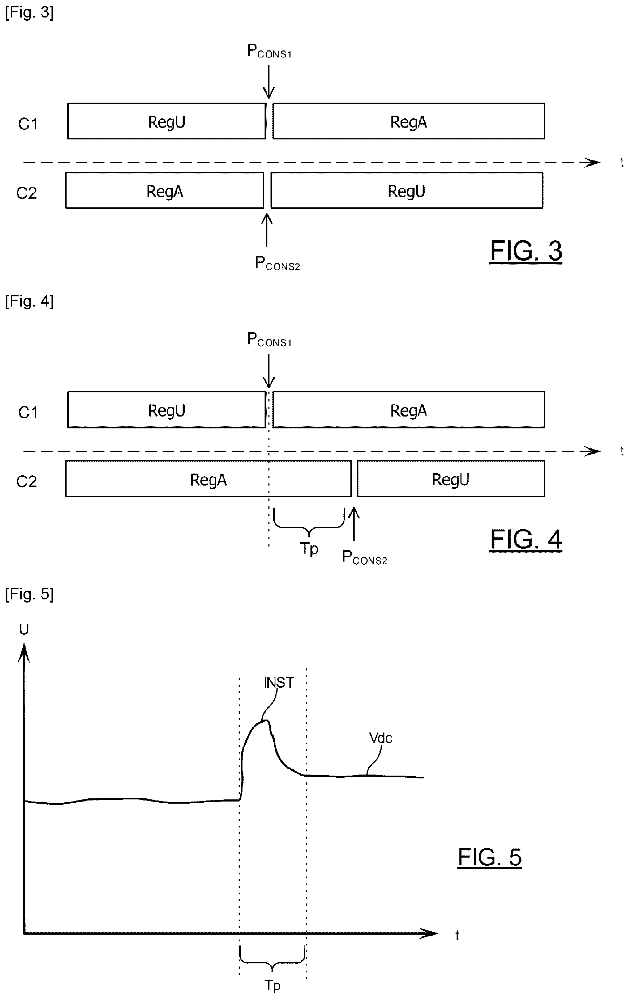

En fonction des circonstances, il peut être souhaitable d'inverser le rôle des convertisseurs C1, C2. A cet effet, en référence à la figure 3, le calculateur ECU détermine une consigne de fonctionnement P_{ECU} qui commande une inversion des rôles. Le dispositif de contrôle 200 détermine des consignes de paramétrage P_{CONS1}, P_{CONS2} pour inverser les rôle des convertisseurs C1, C2. Ainsi, à la réception de la première consigne de paramétrage P_{CONS1}, le premier convertisseur C1 passe d'une régulation en tension RegU à une régulation auxiliaire RegA. A l'inverse, à la réception de la deuxième consigne de paramétrage P_{CONS2}, le deuxième convertisseur C2 passe d'une régulation auxiliaire RegA à une régulation en tension RegU.

En pratique, une telle inversion de rôles est complexe étant donné que la tension de distribution V_{DC} doit être contrôlée de manière optimale lors d'une transition entre deux types de régulation. En outre, le système de génération électrique doit être robuste en cas de perte d'une ou plusieurs consignes de paramétrage P_{CONS1}, P_{CONS2} sur les câbles de communication. En effet, en référence à la figure 4, si la deuxième consigne de paramétrage P_{CONS2} est transmise avec un retard parasite Tp, les deux convertisseurs C1, C2 sont régulés tous les deux de manière auxiliaire RegA, ce qui est une source d'instabilité INST pour la tension de distribution V_{DC} comme illustré à la figure 5.

L'invention cherche ainsi à éliminer ces inconvénients en proposant un procédé de régulation d'un système de génération électrique qui élimine au moins certains de ces inconvénients.

### PRESENTATION DE L'INVENTION

L'invention concerne un système de génération électrique pour alimenter au moins un réseau électrique d'un aéronef, l'aéronef comprenant au moins une turbomachine d'aéronef comprenant un arbre basse pression et un arbre haute pression configurés pour être entraînés en rotation, le système de génération électrique étant configuré pour recevoir une consigne générale de fonctionnement définissant une stratégie d'hybridation, le système de génération électrique comprenant :
- Une unité de distribution électrique ayant une tension de distribution,
- Une première voie d'alimentation comprenant :
   - Une première génératrice configurée pour générer un courant alternatif en prélevant de l'énergie mécanique sur un des arbres basse pression et haute pression,
   - Un premier convertisseur, associé à la première génératrice pour alimenter l'unité de distribution électrique, pour convertir le courant alternatif généré en une première intensité de distribution en fonction de son paramétrage,
- Une deuxième voie d'alimentation comprenant :
   - Une deuxième génératrice configurée pour générer un courant alternatif en prélevant de l'énergie mécanique sur l'autre des arbres basse pression et haute pression,
   - Un deuxième convertisseur, associé à la deuxième génératrice pour alimenter l'unité de distribution électrique, pour convertir le courant alternatif généré en une deuxième intensité de distribution en fonction de son paramétrage,
- Un dispositif de contrôle configuré pour recevoir la consigne générale de fonctionnement et émettre une première consigne de paramétrage pour le premier convertisseur et une deuxième consigne de paramétrage pour le deuxième convertisseur,
- chaque consigne de paramétrage étant soit une consigne en régulation de tension pour asservir le convertisseur à une tension de distribution soit une consigne en régulation auxiliaire de la turbomachine,
- le dispositif de contrôle étant configuré pour émettre une consigne de paramétrage relative à une transition auxiliaire, définie lors d'une transition d'une consigne en régulation de tension à une consigne en régulation auxiliaire, avec un retard de stabilisation par rapport à une consigne de paramétrage relative à une transition en tension, définie lors d'une transition d'une consigne en régulation auxiliaire à une consigne en régulation de tension, de manière à prolonger la régulation en tension lors d'une transition auxiliaire.

L'introduction d'un retard de stabilisation lors d'une transition auxiliaire permet de manière avantageuse de maintenir stable la tension de distribution de l'unité de distribution électrique. Cette temporisation permet de laisser suffisamment de temps à la transition en tension. Autrement dit, cela permet de forcer une parallélisation temporaire de la régulation en tension des deux convertisseurs afin de garantir une qualité du réseau électrique. Cela permet d'assurer un basculement en régulation de tension avant un basculement en régulation auxiliaire.

Le retard de stabilisation est au moins supérieur à la durée maximale de latence pour la réception de la consigne générale de fonctionnement par les convertisseurs.

Selon un aspect, le retard de stabilisation est supérieur à 2ms. Un tel retard de stabilisation permet une temporisation supérieure à un retard parasite maximal.

Selon un aspect, le retard de stabilisation est inférieur à 45ms. Un tel retard de stabilisation permet de conserver une réactivité importante lors d'un changement de régulation.

Selon un aspect, le retard de stabilisation est supérieur à un retard parasite maximal déterminé entre un instant d'émission d'une consigne de paramétrage relatif à une transition et un instant de basculement effectif d'une régulation à une autre. Cela permet d'assurer un basculement en régulation de tension avant un basculement en régulation auxiliaire.

Selon un aspect, le retard de stabilisation est inférieur à trois fois le retard parasite maximal. Un tel retard de stabilisation permet de conserver une réactivité importante lors d'un changement de régulation. Selon un aspect, le retard de stabilisation est sensiblement égal à deux fois le retard parasite maximal. Un tel retard de stabilisation assure un compromis entre stabilité et réactivité.

Selon un aspect, le dispositif de contrôle comprend un bloc de régulation configuré pour calculer un écart entre une mesure de la tension de distribution et une consigne de tension de distribution, le bloc de régulation comprenant un paramètre de gain qui dépend de manière proportionnelle de l'écart. Cela permet d'éviter une dérive en puissance lors d'une parallélisation temporaire.

Selon un aspect, le bloc de régulation est du type « proportionnel intégral », le paramètre de gain étant un gain d'intégration. Le paramètre de gain est très faible lorsque l'erreur en tension est faible et augmente avec l'erreur en tension. Cela évite les dérives de puissance des deux convertisseurs lors de la parallélisation.

Il est également présenté un aéronef comprenant au moins une turbomachine d'aéronef comprenant un arbre basse pression et un arbre haute pression configurés pour être entraînés en rotation, au moins un système de génération électrique, tel que présenté précédemment, alimentant au moins un réseau électrique de l'aéronef.

Il est également présenté un procédé de génération électrique pour alimenter au moins un réseau électrique d'un aéronef à partir d'un système de génération électrique tel que présenté précédemment, l'aéronef comprenant au moins une turbomachine d'aéronef comprenant un arbre basse pression et un arbre haute pression configurés pour être entraînés en rotation, le procédé comportant des étapes consistant à :
- Recevoir une consigne générale de fonctionnement définissant une stratégie d'hybridation,
- A partir de la consigne générale de fonctionnement, émettre une première consigne de paramétrage pour le premier convertisseur et une deuxième consigne de paramétrage pour le deuxième convertisseur,
- Une consigne de paramétrage relative à une transition auxiliaire étant émise avec un retard de stabilisation par rapport à une consigne de paramétrage relative à une transition en tension de manière à prolonger la régulation en tension lors d'une transition auxiliaire.

Il est également présenté un produit de type programme d'ordinateur, comprenant au moins une séquence d'instructions stockée et lisible par un processeur et qui, une fois lue par ce processeur, provoque la réalisation des étapes du procédé présenté précédemment.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique d'un système de génération électrique prélevant de l'énergie mécanique sur une turbomachine d'aéronef.
La figure 2 est une représentation schématique du système de génération électrique avec ses génératrices, ses convertisseurs, une unité de distribution électrique et un dispositif de contrôle.
La figure 3 est une représentation schématique d'un changement théorique de régulation des convertisseurs.
La figure 4 est une représentation schématique d'un changement de régulation des convertisseurs suite à un retard parasite.
La figure 5 est une représentation schématique d'une instabilité de la tension de distribution suite au retard parasite.
La figure 6 est une représentation schématique d'un système de génération électrique prélevant de l'énergie mécanique sur une turbomachine d'aéronef selon une forme de réalisation de l'invention.
La figure 7 représente de manière schématique une transition auxiliaire avec un retard de stabilisation et une transition en tension.
La figure 8 est une représentation schématique de l'émission d'une consigne de paramétrage avec un retard de stabilisation.
La figure 9 est une représentation schématique du retard de basculement entre les deux convertisseurs.
La figure 10 est une représentation schématique du retard de stabilisation et du retard de basculement.
La figure 11 est une représentation schématique de la tension de distribution sans instabilité suite à l'introduction du retard de stabilisation.
La figure 12 est une représentation schématique d'un bloc de régulation pour assurer une régulation en parallèle pendant le retard de basculement.
La figure 13 représente de manière schématique l'évolution de la tension de distribution et des puissances électriques générées pour l'art antérieur et pour la présente invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

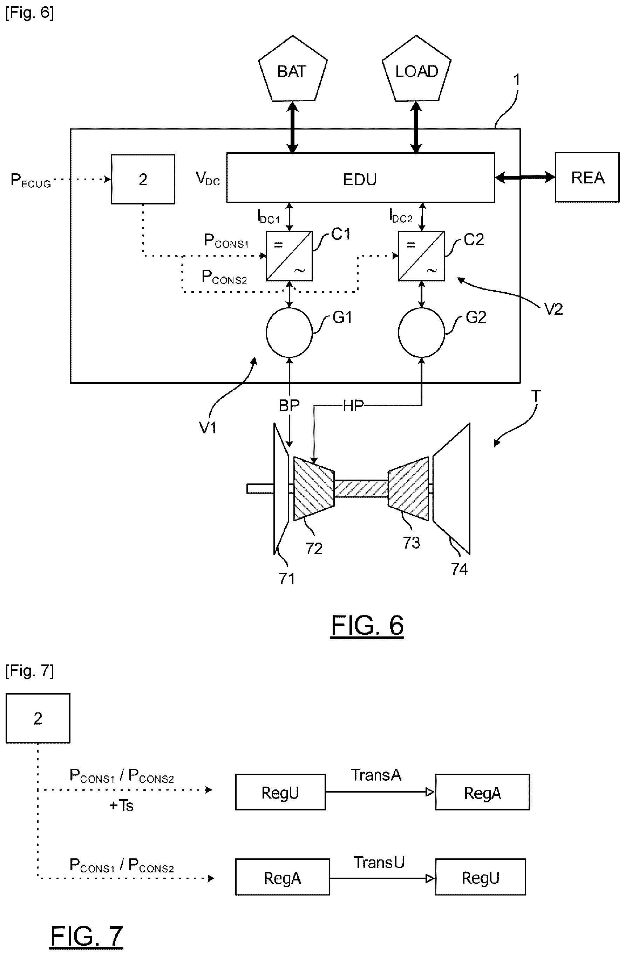

En référence à la figure 6, il est représenté un système de génération électrique 1 pour un aéronef. L'aéronef comprend une turbomachine T comprenant un arbre basse pression BP et un arbre haute pression HP. Dans cet exemple, la turbomachine T comporte un compresseur basse pression 71 et une turbine basse pression 74 qui sont reliées par l'arbre basse pression BP et un compresseur haute pression 72 et une turbine haute pression 73 qui sont reliées par l'arbre haute pression HP.

Le système de génération électrique 1 est configuré pour prélever, d'une part, de l'énergie mécanique sur l'arbre basse pression BP et, d'autre part, de l'énergie mécanique sur l'arbre haute pression HP pour alimenter un réseau électrique de l'aéronef REA avec une tension calibrée. Le système de génération électrique 1 peut être par ailleurs relié à des sources électriques BAT ou des équipements électriques à alimenter LOAD.

En pratique, comme cela sera présenté par la suite, le système de génération électrique 1 permet plus généralement une hybridation électrique pour permettre de prélever ou d'injecter de la puissance à la turbomachine T.

Le système de génération électrique 1 est configuré pour recevoir une consigne générale de fonctionnement P_{ECUG} issue d'un calculateur ECU de la turbomachine T. Cette consigne générale de fonctionnement P_{ECUG} permet de déterminer, par exemple, la quantité de puissance électrique à générer, le prélèvement mécanique sur chaque arbre, etc. Autrement dit, la consigne générale de fonctionnement P_{ECUG} permet de déterminer la stratégie d'hybridation retenue. En pratique, la consigne générale de fonctionnement P_{ECUG} se présente sous la forme d'une consigne de puissance dite « Setpoint PS » ou d'une consigne de partage de puissance dite « Mode PS ».

En référence à la figure 6, le système de génération électrique 1 comporte deux génératrices G1, G2 reliées respectivement à l'arbre basse pression BP et à l'arbre haute pression HP de la turbomachine T. Le système de génération électrique 1 comprend :
- Une première voie d'alimentation V1 comprenant :
   - Une première génératrice G1 configurée pour générer un courant alternatif en prélevant de l'énergie mécanique sur l'arbre basse pression BP,
   - Un premier convertisseur C1, associé à la première génératrice G1, pour convertir le courant alternatif généré en une première intensité de distribution I_{DC1} en fonction de son paramétrage,
- Une deuxième voie d'alimentation V2 comprenant :
   - Une deuxième génératrice G2 configurée pour générer un courant alternatif en prélevant de l'énergie mécanique sur l'arbre haute pression HP,
   - Un deuxième convertisseur C2, associé à la deuxième génératrice G2, pour convertir le courant alternatif généré en une deuxième intensité de distribution I_{DC2} en fonction de son paramétrage.

Dans cet exemple, les génératrices G1, G2 sont de préférence des machines électriques capables de fonctionner selon un mode générateur ou un mode moteur. De manière connue, chaque machine électrique comporte un rotor solidaire d'un arbre tournant (ici un arbre BP ou un arbre HP) et un stator comportant des enroulements de manière à générer des courants alternatifs triphasés. La structure et le fonctionnement d'une telle machine électrique sont connus et ne seront pas présentés plus en détails.

En référence à la figure 6, le système de génération électrique 1 comporte une unité de distribution électrique EDU qui est reliée électriquement au réseau électrique de l'aéronef REA, aux sources électriques BAT ou aux charges électriques LOAD.

Chaque convertisseur C1, C2 peut fournir une tension de distribution V_{DC} à l'unité de distribution électrique EDU. De préférence, l'unité de distribution électrique EDU comporte un bus de tension.

De manière connue, chaque convertisseur C1, C2 comporte une pluralité d'interrupteurs, en particulier des transistors, qui permettent de modifier la puissance électrique générée et la puissance mécanique prélevée sur chaque arbre BP, HP pour adapter l'intensité de distribution I_{DC1}, I_{DC2} en fonction des besoins.

Selon l'invention, en référence à la figure 6, le système de génération électrique 1 comporte un dispositif de contrôle 2 configuré pour recevoir la consigne générale de fonctionnement P_{ECUG} et pour déterminer une première consigne de paramétrage P_{CONS1} pour le premier convertisseur C1 et une deuxième consigne de paramétrage P_{CONS2} pour le deuxième convertisseur C2. Une telle consigne de paramétrage P_{CONS1}, P_{CONS2} permet de commander la commutation des transistors des convertisseurs C1, C2.

Par la suite, chaque consigne de paramétrage P_{CONS1}, P_{CONS2} est soit une consigne en régulation de tension RegU pour asservir le convertisseur C1, C2 à une tension de distribution V_{DC} soit une consigne en régulation auxiliaire RegA, par exemple, une consigne de régulation de puissance ou une consigne de régulation de couple configurée pour asservir le convertisseur C1, C2 à une puissance/couple de l'arbre haute pression HP ou de l'arbre basse pression BP de la turbomachine d'aéronef T.

Comme indiqué précédemment, une régulation de tension RegU permet avantageusement de maitriser la tension de distribution V_{DC} de l'unité de distribution électrique EDU.

Par la suite, en référence à la figure 7, on désigne par « transition auxiliaire TransA » lorsqu'une consigne de paramétrage P_{CONS1}, P_{CONS2} commande le passage d'une consigne en régulation de tension RegU à une consigne en régulation auxiliaire RegA. De manière analogue, on désigne par « transition en tension TransU » lorsqu'une consigne de paramétrage P_{CONS1}, P_{CONS2} commande le passage d'une consigne en régulation auxiliaire RegT, RegP à une consigne en régulation de tension RegU.

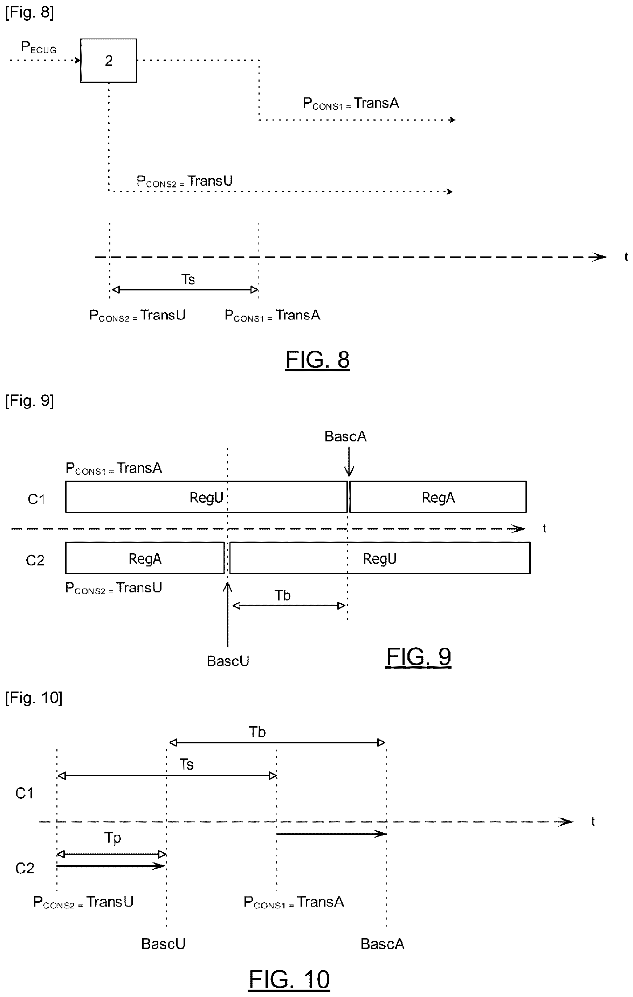

En référence à la figure 8, le dispositif de contrôle 2 est configuré pour émettre une consigne de paramétrage lors d'une transition auxiliaire TransA avec un retard de stabilisation Ts par rapport à une consigne de paramétrage relative à une transition en tension TransU. Ainsi, une consigne de paramétrage relative à une transition auxiliaire TransA est décalée temporellement par rapport à une consigne de paramétrage relative à une transition en tension TransU. Cela permet au convertisseur C1, C2, concerné par la transition auxiliaire TransA, de stabiliser la tension de distribution V_{DC} de manière temporaire pour éviter toute instabilité. Cela est particulièrement avantageux si le convertisseur C1, C2, concerné par la transition en tension TransU reçoit sa consigne de paramétrage avec un retard parasite.

Dans l'art antérieur, le dispositif de contrôle 2 était configuré pour émettre directement la première consigne de paramétrage P_{CONS1} pour le premier convertisseur C1 et la deuxième consigne de paramétrage P_{CONS2} pour le deuxième convertisseur C2, de manière sensiblement simultanée. L'introduction d'un retard de stabilisation Ts permet ainsi de modifier la temporisation du dispositif de contrôle 2 lors de l'émission de ses consignes de paramétrage P_{CONS1}, P_{CONS2}.

En référence aux figures 8 à 10, lors d'un exemple de mise en œuvre d'un fonctionnement nominal, le premier convertisseur C1 est en régulation de tension RegU tandis que le deuxième convertisseur C2 est en régulation auxiliaire RegA. Il va de soi que les rôles des convertisseurs C1, C2 pourraient être inversés.

Comme illustré à la figure 8, le calculateur ECU émet une consigne générale de fonctionnement P_{ECUG} qui commande que le premier convertisseur C1 soit en régulation auxiliaire RegA tandis que le deuxième convertisseur C2 soit en régulation de tension RegU. Le dispositif de contrôle 2 émet la première consigne de paramétrage P_{CONS1} avec un retard de stabilisation Ts par rapport à la deuxième consigne de paramétrage P_{CONS2}.

En référence aux figures 9 et 10, la première consigne de paramétrage P_{CONS1} entraine un basculement du premier convertisseur C1 en régulation auxiliaire RegA à un instant de basculement auxiliaire BascA. De manière analogue, la deuxième consigne de paramétrage P_{CONS2} entraine un basculement du deuxième convertisseur C2 en régulation en tension RegU à un instant de basculement en tension BascU.

Comme illustré à la figure 10, l'instant de basculement auxiliaire BascA survient postérieurement à l'instant de basculement en tension BascU avec un retard de basculement Tb. Pendant le retard de basculement Tb, les deux convertisseurs C1, C2 fonctionnement de manière parallèle en régulation de tension RegU. **En** pratique, il est complexe de déterminer la durée entre l'émission d'une consigne de paramétrage et l'instant de basculement associé du fait d'un retard parasite Tp (retard de transmission, pertes de trames, etc.).

Aussi, le retard de stabilisation **Ts** doit être calibré pour être plus grand que le retard parasite Tp. De manière préférée, on détermine un retard parasite maximal Tpmax, par exemple de manière statistique, par simulation ou par retour d'expérience. Le retard de stabilisation Ts est supérieur au retard parasite maximal Tpmax, de préférence, inférieur à trois fois le retard parasite maximal Tpmax de manière à ne pas retarder de manière trop importante la transition auxiliaire TransA. Dans cet exemple, le retard de stabilisation Ts est égal à deux fois le retard parasite maximal Tpmax.

Selon un aspect, le retard de stabilisation Ts est supérieur à 2ms, de préférence, inférieur à 45ms. Cela permet d'assurer un compromis entre stabilité et réactivité.

Le retard de stabilisation Ts permet une temporisation assurant la qualité du réseau électrique pendant le changement du type de régulation lors d'une transition auxiliaire TransA.

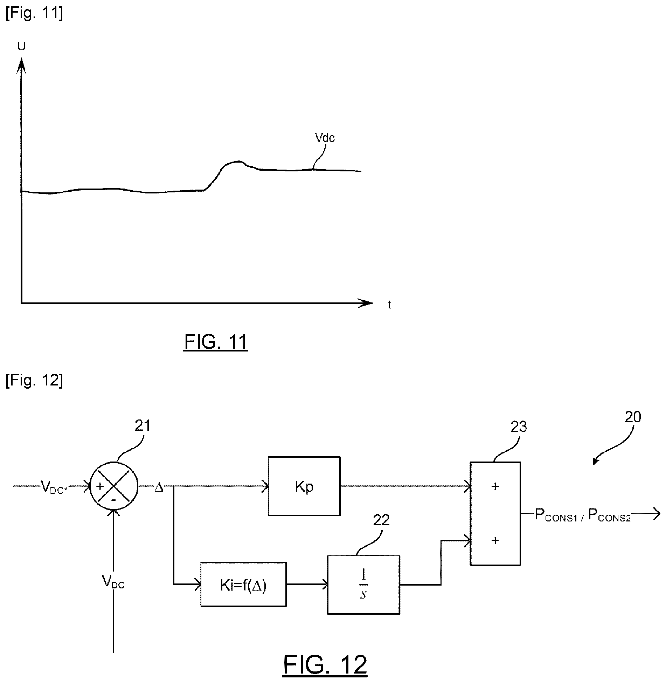

Suite à l'introduction du retard de stabilisation Ts, les deux convertisseurs C1, C2 sont régulés en tension RegU de manière parallèle pendant la durée de basculement Tb comme illustré à la figure 9. Cette régulation temporaire en tension permet d'alimenter en parallèle l'unité de distribution électrique EDU et de limiter les instabilités de la tension de distribution V_{DC} comme illustré à la figure 11.

De manière connue, une machine électrique fonctionne selon quatre quadrants définis en fonction de sa vitesse et de son couple. Pour réduire l'usure d'une machine électrique, il est préférable d'éviter un changement de quadrant au cours d'une régulation. Une alimentation en parallèle demeure complexe car il faut minimiser la dérive de puissance entre les deux convertisseurs C1, C2 tout en réduisant l'occurrence de changement de quadrant (moteur, générateur).

Dans cet exemple, en référence à la figure 12, le dispositif de contrôle 2 comporte un bloc de régulation 20 du type « proportionnel intégral » qui met en œuvre un soustracteur 21 qui calcule un écart Δ entre une mesure de la tension de distribution V_{DC} et une consigne de tension de distribution V_{DC}*, une constante gain de proportionnalité Kp, un gain d'intégration Ki, un intégrateur 22 et un sommateur 23 de manière à déterminer la consigne de paramétrage P_{CONS1}, P_{CONS2}.

Dans cet exemple, afin d'introduire un retard de stabilisation Ts, le gain d'intégration Ki n'est pas une constante mais une variable qui dépend de l'écart Δ (Ki=f(Δ)) avec f une fonction proportionnelle. Cela permet de modifier de manière pratique le bloc de régulation 20. Ainsi, le gain d'intégration Ki dépend de l'écart Δ de tension afin de réduire toute dérive en tension. De manière avantageuse, lorsque l'écart Δ est faible, le gain d'intégration Ki est faible. A l'inverse, lorsque l'écart Δ est fort, le gain d'intégration Ki est fort.

La fonction proportionnelle f peut prendre plusieurs formes, par exemple, une fonction escalier (ou « tout ou rien »). Le gain d'intégration Ki peut être égal à une première valeur Ki1 si l'écart Δ est inférieur à seuil prédéterminé et le gain d'intégration Ki peut être égal à une deuxième valeur Ki2, supérieure à la première valeur Ki1, si l'écart Δ est supérieur audit seuil prédéterminé. La fonction proportionnelle f peut également être une fonction du type hystérésis, linéaire avec ou sans saturation.

Une régulation en tension RegU basée sur un écart Δ de tension permet à chaque convertisseur C1, C2 de se réguler de manière optimale afin de réaliser une mise en parallèle transitoire des convertisseurs C1, C2. Chaque convertisseur C1, C2 se régule ainsi de manière pratique pour alimenter l'unité de distribution électrique EDU. Les deux boucles de tension peuvent ainsi travailler en parallèle.

Le bloc de régulation 20 est mis en œuvre lorsque les deux convertisseurs C1, C2 sont en régulation de tension RegU.

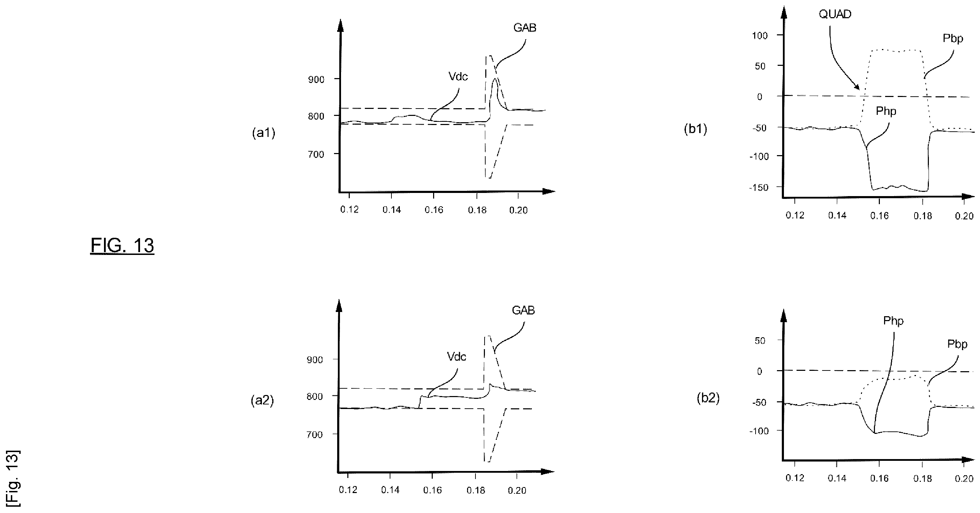

En référence à la figure 13, lors d'un fonctionnement en parallèle de deux génératrices G1, G2, les deux convertisseurs C1, C2 fournissent respectivement des puissances Pbp, Php afin de fournir une tension de distribution Vdc qui doit respecter un gabarit de tension GAB prédéterminé afin d'assurer la qualité de réseau.

Dans l'art antérieur, comme illustré aux courbes a1, b1 de la figure 13, la tension de distribution Vdc est aux limites du gabarit de tension GAB et on observe un changement de quadrant de fonctionnement QUAD des génératrices G1, G2, ce qui augmente l'usure et le risque d'instabilité

Afin de minimiser le changement de quadrant d'une génératrice G1, G2, lors d'un fonctionnement en parallèle, les convertisseurs C1, C2 sont commandés pour fournir chacun la moitié des besoins en tension de distribution V_{DC} de l'unité de distribution électrique EDU comme illustré à la courbe b2 de la figure 13. La tension de distribution Vdc respecte en outre le gabarit de tension GAB comme illustré à la courbe a2 de la figure 13.

Ainsi, même si les puissances des deux génératrices G1, G2 dérivent pendant la mise en parallèle, il n'y aura pas de changement de quadrant de fonctionnement des génératrices G1, G2, ce qui limite de manière avantageuse l'usure et le risque d'instabilité.

Grâce à l'invention, une inversion de rôles de convertisseurs C1, C2 peut être réalisée sans instabilité sur la tension de distribution VDC grâce à l'introduction d'un retard de stabilisation Ts qui permet une mise en parallèle temporaire des convertisseurs C1, C2.

## Revendications

1. Système de génération électrique (1) pour alimenter au moins un réseau électrique d'un aéronef (REA), l'aéronef comprenant au moins une turbomachine d'aéronef (T) comprenant un arbre basse pression (BP) et un arbre haute pression (HP) configurés pour être entraînés en rotation, le système de génération électrique (1) étant configuré pour recevoir une consigne générale de fonctionnement (P_{ECUG}) définissant une stratégie d'hybridation, le système de génération électrique (1) comprenant :
- une unité de distribution électrique (EDU) ayant une tension de distribution (V_{DC}),
- Une première voie d'alimentation (V1) comprenant :
• Une première génératrice (G1) configurée pour générer un courant alternatif en prélevant de l'énergie mécanique sur un des arbres basse pression (BP) et haute pression (HP),
• Un premier convertisseur (C1), associé à la première génératrice (G1) pour alimenter l'unité de distribution électrique (EDU), configuré pour convertir le courant alternatif généré en une première intensité de distribution (I_{DC1}) en fonction de son paramétrage,
- Une deuxième voie d'alimentation (V2) comprenant :
• Une deuxième génératrice (G2) configurée pour générer un courant alternatif en prélevant de l'énergie mécanique sur l'autre des arbres basse pression (BP) et haute pression (HP),
• Un deuxième convertisseur (C2), associé à la deuxième génératrice (G2) pour alimenter l'unité de distribution électrique (EDU), configuré pour convertir le courant alternatif généré en une deuxième intensité de distribution (I_{DC2}) en fonction de son paramétrage,
- Un dispositif de contrôle (2) configuré pour recevoir la consigne générale de fonctionnement (P_{ECUG}) et émettre une première consigne de paramétrage (P_{CONS1}) pour le premier convertisseur (C1) et une deuxième consigne de paramétrage (P_{CONS2}) pour le deuxième convertisseur (C2),
- chaque consigne de paramétrage (P_{CONS1}, P_{CONS2}) étant soit une consigne en régulation de tension (RegU) pour asservir le convertisseur (C1, C2) à une tension de distribution (V_{DC}) soit une consigne en régulation auxiliaire (RegA) de la turbomachine (T),
- le dispositif de contrôle (2) étant configuré pour émettre une consigne de paramétrage relative à une transition auxiliaire (TransA), définie lors d'une transition d'une consigne en régulation de tension (RegU) à une consigne en régulation auxiliaire (RegA), avec un retard de stabilisation (Ts) par rapport à une consigne de paramétrage relative à une transition en tension (TransU), définie lors d'une transition d'une consigne en régulation auxiliaire (RegA) à une consigne en régulation de tension (RegU), de manière à prolonger la régulation en tension (RegU) lors d'une transition auxiliaire (TransA).

2. Système de génération électrique (1) selon la revendication 1, dans lequel le retard de stabilisation (Ts) est supérieur à 2ms.

3. Système de génération électrique (1) selon l'une des revendications 1 à 2, dans lequel le retard de stabilisation (Ts) est inférieur à 45ms.

4. Système de génération électrique (1) selon l'une des revendications 1 à 3, dans lequel le retard de stabilisation (Ts) est supérieur à un retard parasite maximal déterminé entre un instant d'émission d'une consigne de paramétrage relatif à une transition et un instant de basculement effectif d'une régulation à une autre.

5. Système de génération électrique (1) selon la revendication 4, dans lequel le retard de stabilisation (Ts) est inférieur à trois fois le retard parasite maximal.

6. Système de génération électrique (1) selon la revendication 5, dans lequel le retard de stabilisation (Ts) est sensiblement égal à deux fois le retard parasite maximal.

7. Système de génération électrique (1) selon l'une des revendications 1 à 6, dans lequel le dispositif de contrôle (2) comprend un bloc de régulation (20) configuré pour calculer un écart (Δ) entre une mesure de la tension de distribution (V_{DC}) et une consigne de tension de distribution (V_{DC}*), le bloc de régulation (20) comprenant un paramètre de gain (Ki) qui dépend de manière proportionnelle de l'écart (Δ).

8. Aéronef comprenant au moins une turbomachine d'aéronef (T) comprenant un arbre basse pression (BP) et un arbre haute pression (HP) configurés pour être entraînés en rotation, au moins un système de génération électrique (1), selon l'une des revendications 1 à 7, alimentant au moins un réseau électrique de l'aéronef (REA).

9. Procédé de génération électrique pour alimenter au moins un réseau électrique d'un aéronef (REA) à partir d'un système de génération électrique (1) selon l'une des revendications 1 à 7, l'aéronef comprenant au moins une turbomachine d'aéronef (T) comprenant un arbre basse pression (BP) et un arbre haute pression (HP) configurés pour être entraînés en rotation, le procédé comportant des étapes consistant à :
- Recevoir une consigne générale de fonctionnement (P_{ECUG}) définissant une stratégie d'hybridation,
- A partir de la consigne générale de fonctionnement (P_{ECUG}), émettre une première consigne de paramétrage (P_{CONS1}) pour le premier convertisseur (C1) et une deuxième consigne de paramétrage (P_{CONS2}) pour le deuxième convertisseur (C2),
- une consigne de paramétrage relative à une transition auxiliaire (TransA) étant émise avec un retard de stabilisation (Ts) par rapport à une consigne de paramétrage relative à une transition en tension (TransU) de manière à prolonger la régulation en tension (RegU) lors d'une transition auxiliaire (TransA).

10. Produit de type programme d'ordinateur, comprenant au moins une séquence d'instructions stockée et lisible par un processeur et qui, une fois lue par ce processeur, provoque la réalisation des étapes du procédé de la revendication 9.
